# EUROPEAN PATENT APPLICATION

(11) **EP 1 811 248 A1**
(43) Date of publication of application: **25.07.2007**
(21) Application number: 05806194.6
(22) Date of filing: 10.11.2005
(51) Int. Cl.: F25B 49/02, H02H 7/26, F25B 1/00, H02J 13/00, H02H 3/06

(54) **FREEZING APPARATUS**

(30) Priority: 10.11.2004 JP 2004326509
(71) Applicant: DAIKIN INDUSTRIES, LTD., Kita-ku, Osaka 530-8323 (JP)
(72) Inventor: TAKEGAMI, Massaki, Osaka 591-8511 (JP); TANIMOTO, Kenji, Osaka 591-8511 (JP)
(74) Representative: HOFFMANN EITLE
(86) International application number: PCT/JP2005/020603
(87) International publication number: WO 2006/051853

(57) **Abstract**

A refrigeration system includes a controller **(90)** for controlling operation restart after a breaker trips owing to failure in electric systems for refrigeration system components. The controller **(90)** includes a sequential startup section **(91)** for, upon the operation restart, sequentially starting up target compressors **(2A, 2B, 2C)** and outdoor fans **(F1, F2)** previously selected from among the refrigeration system components, and failure processing section **(92)** for, if the breaker trips again during the sequential startup of the target compressors and outdoor fans, excluding the compressor or outdoor fan **(2A,** ...) supplied with electric power just before the breaker's trip from the target refrigeration system components to be started up by the sequential startup section **(91).** Thus, a failed component is identified by the failure processing section **(92)** and only the normal components, leaving out the failed component, are then started up, thereby resuming the operation.

## Description

### Technical Field

This invention relates to refrigeration systems and particularly relates to controlling restart of refrigeration system components when they are halted owing to failure in their electric systems.

### Background Art

There have been known refrigeration systems including a refrigerant circuit that operates in a refrigeration cycle using a plurality of compressors (see, for example, Patent document 1). The refrigeration system in Patent document 1 is formed with an air-conditioning refrigerant circuit for cooling and heating a room and a chilling/freezing refrigerant circuit for cooling the insides of cold storages for foods or the like and these refrigerant circuits are formed by connecting three compressors, condensers and evaporators. In the above refrigeration system, principally, one of the three compressors is used for air conditioning, the remaining two are used for chilling and freezing and a refrigeration operation is run by circulating refrigerant through each of the refrigerant circuits.
Patent document 1: Unexamined Japanese Patent Publication No. 2003-75022

### - Problems to Be Solved -

The refrigeration system in Patent document 1, however, takes no measure to cope with failure owing to which a breaker trips. The refrigeration system has a problem that if, for example, one or two of the three compressors cause failure in their electric systems to halt the refrigeration operation, taking no measure to cope with it prevents the resumption (restart) of the refrigeration operation. Specifically, during refrigeration operation, the electric system of any one of the compressors may cause failure such as electric leakage so that power supply is shut off to halt the operation. In such a case, however, since it is not known exactly which of the three compressors have a failed electric system, simple restart of the compressors leads to power supply being shut off again owing to the failed electric system. Therefore, so long as the compressor having its electric system failed is removed, the above refrigeration system cannot restart the operation.

The present invention has been made in view of the foregoing points and its object is to at least resume (restart) the refrigeration operation after its halt as a result of shutoff of power supply due to failure in one or some of electric systems of refrigeration system components by identifying the refrigeration system components having their electric systems failed and inhibiting their restart.

### Disclosure of the Invention

Solutions taken by the present invention are as follows.

A first solution is directed to a refrigeration system for performing a refrigeration operation in which electric systems of refrigeration system components (**2A, 2B**, ...) are supplied with electric power from a power supply through a breaker. Further, the refrigeration system of this solution comprises sequential startup means (**91**) for, upon operation restart after the breaker trips owing to failure in the electric systems, sequentially starting up target refrigeration system components (**2A, 2B**, ...) previously selected from among the refrigeration system components. Furthermore, the refrigeration system of the present invention comprises failure processing means (**92**) for, if the breaker trips again owing to failure in the electric systems during the sequential startup of the target refrigeration system components through the sequential startup means (**91**), excluding the refrigeration system component (**2A, 2B**, ...) supplied with electric power just before the occurrence of the failure from the target refrigeration system components to be started up by the sequential startup means (**91**).

In the above solution, if one or some of the refrigeration system components cause failure in their electric systems to halt the refrigeration operation, the refrigeration system components having their electric systems failed are identified.

Specifically, for example, suppose that electric systems of a plurality of refrigeration system components such compressors cause failure, such as electric leakage or disconnection, so that the breaker trips to abnormally halt the refrigeration operation. First, the sequential startup means (**91**) allows electric power to be sequentially supplied to the previously selected target refrigeration system components (for example, a plurality of compressors) to start up them. In this case, if the first compressor normally starts up through power supply, then the second compressor is supplied with power. Next, if the second compressor does not normally start up and the breaker trips again, the failure processing means (**92**) excludes the second compressor from the target refrigeration system components to be started up by the sequential startup means (**91**). In other words, the second compressor is identified as a refrigeration system component having caused failure in its electric system (as a failed component) and the other compressors other than the second compressor are sequentially started up again as the target refrigeration system components. By repeating the above startup process, all of failed components having their electric systems failed are identified from among the previously selected target refrigeration system components. Then, the refrigeration operation is normally resumed as by the removal of the identified failed components.

A second solution is directed to the above first solution, wherein the registration system further comprises transition means (**93**) for, when the target refrigeration system components (**2A, 2B**, ...) to be started up by the sequential startup means (**91**) are all normally started up, making a transition to a normal operation while holding in a halted state the refrigeration system component (**2A, 2B**, ...) excluded from the target refrigeration system components by the failure processing means (**92**).

In the above solution, when all the target refrigeration system components (**2A**, **2B**, ...) to be started up by the sequential startup means (**91**) normally start up, i.e., when all of failed components are identified, the normal operation is performed by starting up only the normal refrigeration system components while supplying the failed components with no power to hold them in a halted state. Thus, the refrigeration operation is surely resumed.

A third solution is directed to the first solution, wherein the target refrigeration system components to be sequentially started up by the sequential startup means (**91**) are a plurality of compressors (**2A, 2B, 2C**).

In the above solution, in the case where a refrigeration operation using, for example, three compressors (**2A, 2B, 2C**) is abnormally halted and, for example, two compressors (**2B, 2C**) are identified as failed components by the failure processing means (**92**), only a single compressor (**2A**), leaving out the two failed components, is started up to resume the refrigeration operation. Thus, since at least the normal compressor (**2A**) is surely started up, the operation is surely resumed.

A fourth solution is directed to the first solution, wherein the target refrigeration system components to be sequentially started up by the sequential startup means (**91**) are a plurality of compressors (**2A, 2B, 2C**) and a plurality of fans (**F1, F2**).

In the above solution, in the case where a refrigeration operation using, for example, three compressors (**2A, 2B, 2C**) and two outdoor fans (**F1, F2**) is abnormally halted and, for example, two compressors (**2B, 2C**) and one outdoor fan (**F2**) are identified as failed components by the failure processing means (**92**), only a single compressor (**2A**) and a single outdoor fan (**F1**), leaving out those failed components, are started up to resume the refrigeration operation. Thus, since at least the normal compressor (**2A**) and the normal outdoor fan (**F1**) are surely started up, the operation is surely resumed.

### - Effects -

According to the first solution, if the breaker (**81**) trips owing to failure in the electric system of a refrigeration system component to abnormally halt the operation, the previously selected target refrigeration system components (**2A, 2B**, ...) are sequentially started up. If during the sequential startup the breaker (**81**) trips again owing to failure in the electric system, the refrigeration system component supplied with electric power just before the trip is not started up anymore. Therefore, from among the target refrigeration system components (**2A, 2B**, ...), the component having caused failure in its electric system can be surely identified as a failed component. Consequently, if the refrigeration system component identified as a failed component is supplied with no electric power, in other words, if only normal refrigeration system components, leaving out the failed component, are supplied with electric power, the operation can surely be resumed (restarted).

According to the second solution, if all the target refrigeration system components (**2A, 2B**, ...) to be sequentially started up normally start up, a transition to the normal operation is made while the refrigeration system component excluded from the target refrigeration system components is held halted. This avoids that the breaker (**81**) trips again owing to failure in the electric system, thereby surely resuming (restarting) the normal operation. Therefore, though the capacity associated with the failed component is not performed, at least the operation can be surely resumed (restarted).

According to the third solution, a plurality of compressors (**2A, 2B, 2C**) are selected as target refrigeration system components to be sequentially started up by the sequential startup means (**91**). According to the fourth solution, in addition to the plurality of compressors (**2A, 2B, 2C**), a plurality of outdoor fans (**F1, F2**) are selected as target refrigeration system components to be sequentially started up by the sequential startup means (**91**). Therefore, even if some of them becomes out of action owing to failures in their electric systems, at least a normal compressor (**2A, 2B, 2C**) and/or a normal outdoor fan (**F1, F2**) can be started up, which ensures operation resumption.

### Brief Description of Drawings

[Fig. **1**] Figure **1** is a piping diagram for a refrigeration system according to an embodiment.
[Fig. **2**] Figure **2** is a block diagram showing a power supply circuit according to the embodiment.
[Fig. **3**] Figure **3** is a piping diagram showing a refrigerant flow during a cooling and refrigeration operation of the refrigeration system.
[Fig. **4**] Figure **4** is a piping diagram showing a refrigerant flow during a heating and refrigeration operation of the refrigeration system.
[Fig. **5**] Figure **5** is a flowchart showing the control on operation resumption according to Embodiment 1.
[Fig. **6**] Figure **6** is a characteristic diagram (first one) showing the relation between power distribution state and failure flag according to Embodiment 1.
[Fig. **7**] Figure **7** is a characteristic diagram (second one) showing the relation between power distribution state and failure flag according to Embodiment 1.
[Fig. **8**] Figure **8** is a flowchart showing the control on operation resumption according to Embodiment 2.

### Explanation of Reference Characters

- **1**: refrigeration system
- **2A**: inverter compressor (refrigeration system component)
- **2B**: first non-inverter compressor (refrigeration system component)
- **2C**: second non-inverter compressor (refrigeration system component)
- **F1**: first outdoor fan (refrigeration system component)
- **F2**: second outdoor fan (refrigeration system component)
- **91**: sequential startup section (sequential startup means)
- **92**: failure processing section (failure processing means)
- **93**: operation transition section (operation transition means)

### Best Mode for Carrying Out the Invention

Embodiments of the present invention will be described below in detail with reference to the drawings.

### <<Embodiment 1 of the Invention>>

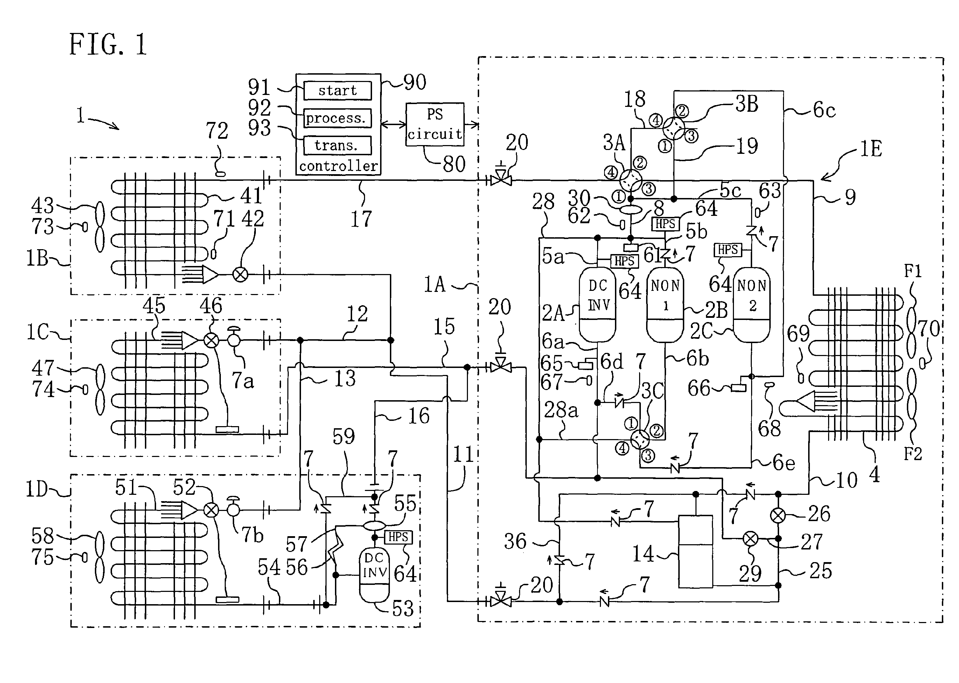

As shown in Figure **1**, a refrigeration system (**1**) according to Embodiment 1 is a system installed in a convenience store for the purpose of cooling a cold storage display case and a freezer display case and cooling/heating the store.

The refrigeration system (**1**) comprises an outdoor unit (**1A**), an indoor unit (**1B**), a chilling unit (**1C**) and a freezing unit (**1D**) and includes a refrigerant circuit (**1E**) for operating in a vapor compression refrigeration cycle. The refrigerant circuit (**1E**) comprises an air-conditioning system including the indoor unit (**1B**) and a cooling system including the chilling unit (**1C**) and the freezing unit (**1D**). Further, the refrigerant circuit (**1E**) is configured to switch between a cooling cycle and a heating cycle.

The indoor unit (**1B**) is placed, for example, in a selling space, to cool and heat the store. The chilling unit (**1C**) is placed in the cold storage display case to cool the air in the display case. The freezing unit (**1D**) is placed in the freezer display case to cool the air in the display case.

### <Outdoor Unit>

The outdoor unit (**1A**) includes three compressors (**2A, 2B, 2C**) that are compression mechanisms, three four-way selector valves (**3A, 3B, 3C**) that are flow channel selectors, and an outdoor heat exchanger (**4**) that is a heat-source side heat exchanger.

The three compressors (**2A, 2B, 2C**) are an inverter compressor (**2A**) as a first compressor, a first non-inverter compressor (**2B**) as a second compressor, and a second non-inverter compressor (**2C**) as a third compressor. Each of these compressors is formed of a hermetic, high-pressure dome type scroll compressor. The inverter compressor (**2A**) is a variable capacity compressor in which a motor is controlled by an inverter to make the capacity stepwise or continuously variable. The first non-inverter compressor (**2B**) and second non-inverter compressor (**2C**) are fixed capacity compressors in which a motor is driven at a constant rotation number.

Discharge pipes (**5a, 5b, 5c**) for the inverter compressor (**2A**), the first non-inverter compressor (**2B**) and the second non-inverter compressor (**2C**) are connected to a common high-pressure gas pipe (**8**), and the high-pressure gas pipe (**8**) is connected to the first port of the first four-way selector valve (**3A**). The discharge pipe (**5b**) for the first non-inverter compressor (**2B**) and the discharge pipe (**5c**) for the second non-inverter compressor (**2C**) are provided with check valves (**7**), respectively. The high-pressure gas pipe (**8**) is provided with an oil separator (**30**).

The outdoor heat exchanger (**4**) is connected at one end, a gas-side end, through an outdoor gas pipe (**9**) to the third port of the first four-way selector valve (**3A**) and connected at the other end, a liquid-side end, to one end of an outdoor liquid pipe (**10**) that is a liquid line. The outdoor liquid pipe (**10**) includes a receiver (**14**) disposed partway therealong to store liquid refrigerant and is connected at the other end through a shut-off valve (**20**) to a connecting liquid pipe (**11**) disposed outside the outdoor unit (**1A**). The outdoor liquid pipe (**10**) also includes a check valve (**7**) disposed upstream of the receiver (**14**) to allow only a refrigerant flow toward the receiver (**14**) and a check valve (**7**) disposed downstream of the receiver (**14**) to allow only a refrigerant flow from the receiver (**14**) toward a shut-off valve (**40**).

The outdoor heat exchanger (**4**) is formed of, for example, a cross-fin type fin-and-tube heat exchanger. Disposed close to the outdoor heat exchanger (**4**) are two outdoor fans (**F1, F2**) that are heat-source fans.

The fourth port of the first four-way selector valve (**3A**) is connected via a shut-off valve (**20**) to a first connecting gas pipe (**17**) disposed outside the outdoor unit (**1A**), and the second port thereof is connected through a connecting pipe (**18**) to the fourth port of the second four-way selector valve (**3B**). The first port of the second four-way selector valve (**3B**) is connected through an auxiliary gas pipe (**19**) to the discharge pipe (**5c**) for the second non-inverter compressor (**2C**). The second port of the second four-way selector valve (**3B**) is connected to a suction pipe (**6c**) for the second non-inverter compressor (**2C**). The third port of the second four-way selector valve (**3B**) is a blocked port. Therefore, the second four-way selector valve (**3B**) may be replaced with a three-way selector valve having three ports.

The first four-way selector valve (**3A**) is configured to switch between a first position (the position shown in the solid lines in Figure **1**) in which the high-pressure gas pipe (**8**) is communicated with the outdoor gas pipe (**9**) and the connecting pipe (**18**) is communicated with the first connecting gas pipe (**17**) and a second position (the position shown in the broken lines in Figure **1**) in which the high-pressure gas pipe (**8**) is communicated with the first connecting gas pipe (**17**) and the connecting pipe (**18**) is communicated with the outdoor gas pipe (**9**). On the other hand, the second four-way selector valve (**3B**) is configured to switch between a first position (the position shown in the solid lines in Figure **1**) in which the auxiliary gas pipe (**19**) is communicated with the blocked port and the connecting pipe (**18**) is communicated with the suction pipe (**6c**) for the second non-inverter compressor (**2C**) and a second position (the position shown in the broken lines in Figure **1**) in which the auxiliary gas pipe (**19**) is communicated with the connecting pipe (**18**) and the suction pipe (**6c**) is communicated with the blocked port.

A suction pipe (**6a**) for the inverter compressor (**2A**) is connected via a shut-off valve (**20**) to a second connecting gas pipe (**15**) disposed outside the outdoor unit (**1A**). A suction pipe (**6b**) for the first non-inverter compressor (**2B**) is connected to the third four-way selector valve (**3C**) and configured to be communicated with either the suction pipe (**6a**) for the inverter compressor (**2A**) or the suction pipe (**6c**) for the second non-inverter compressor (**2C**).

More specifically, the suction pipe (**6a**) for the inverter compressor (**2A**) is connected through a branch pipe (**6d**) to the first port of the third four-way selector valve (**3C**). The suction pipe (**6b**) for the first non-inverter compressor (**2B**) is connected to the second port (**P2**) of the third four-way selector valve (**3C**). The suction pipe (**6c**) for the second non-inverter compressor (**2C**) is connected through a branch pipe (**6e**) to the third port (**P3**) of the third four-way selector valve (**3C**). The fourth port of the third four-way selector valve (**3C**) is connected to a branch pipe (**28a**) branched from the later-described gas vent pipe (**28**) extending from the receiver (**14**). The branch pipes (**6d, 6e**) are provided with check valves (**7**), one for each branch pipe, and each check valve allows a refrigerant flow toward the third four-way selector valve (**3C**).

The third four-way selector valve (**3C**) is configured to switch between a first position (the position shown in the solid lines in Figure **1**) in which the suction pipe (**6a**) for the inverter compressor (**2A**) is communicated with the suction pipe (**6b**) for the first non-inverter compressor (**2B**) and the suction pipe (**6c**) for the second non-inverter compressor (**2C**) is communicated with the gas vent pipe (**28**) and a second position (the position shown in the broken lines in Figure **1**) in which the suction pipe (**6a**) for the inverter compressor (**2A**) is communicated with the gas vent pipe (**28**) and the suction pipes (**6b, 6c**) for the non-inverter compressors (**2B, 2C**) are communicated with each other.

The outdoor liquid pipe (**10**) is connected to an auxiliary liquid pipe (**25**) that bypasses the receiver (**14**) and the check valve (**7**) upstream thereof. The auxiliary liquid pipe (**25**) is provided with an outdoor expansion valve (**26**) that is an expansion mechanism. The outdoor liquid pipe (**10**) is also connected to a liquid branch pipe (**36**) having a check valve (**7**). One end of the liquid branch pipe (**36**) is connected to the outdoor liquid pipe (**10**) between the receiver (**14**) and the check valve (**7**) upstream of the receiver (**14**) and the other end thereof is connected to the outdoor liquid pipe (**10**) between the check valve (**7**) and the shut-off valve (**20**) both downstream of the receiver (**14**). The check valve (**7**) in the liquid branch pipe (**36**) allows only a refrigerant flow toward the receiver (**14**).

Connected between the auxiliary liquid pipe (**25**) and the suction pipe (**6a**) for the inverter compressor (**2A**) is a liquid injection pipe (**27**) with an electronic expansion valve (**29**) that is an expansion mechanism. Connected between an upper part of the receiver (**14**) and the discharge pipe (**5a**) for the inverter compressor (**2A**) is the gas vent pipe (**28**) with a check valve (**7**). The check valve (**7**) of the gas vent pipe (**28**) is disposed between a connection point of the branch pipe (**28a**) with the gas vent pipe (**28**) and the receiver (**14**) and allows only a refrigerant flow from the receiver (**14**) toward the discharge pipe (**5a**).

In the outdoor unit (**1A**), the three compressors (**2A, 2B, 2C**), the two outdoor fans (**F1, F2**), the three four-way selector valves (**3A, 3B, 3C**), the outdoor expansion valve (**26**) and like elements are refrigeration system components.

### <Indoor Unit>

The indoor unit (**1B**) includes an indoor heat exchanger (**41**) that is a utilization side heat exchanger and an indoor expansion valve (**42**) that is an expansion mechanism. The indoor heat exchanger (**41**) is connected at one end, a gas-side end, to the first connecting gas pipe (**17**) and connected at the other end, a liquid-side end, via the indoor expansion valve (**42**) to the connecting liquid pipe (**11**). The indoor heat exchanger (**41**) is, for example, a cross-fin type fin-and-tube heat exchanger. Disposed close to the indoor heat exchanger (**41**) is an indoor fan (**43**) that is a utilization side fan. The indoor expansion valve (**42**) is formed of a motor-operated expansion valve. In the indoor unit (**1B**), the indoor expansion valve (**42**) and the indoor fan (**43**) are refrigeration system components.

### <Chilling Unit>

The chilling unit (**1C**) includes a chilling heat exchanger (**45**) that is a utilization side heat exchanger and a chilling expansion valve (**46**) that is an expansion mechanism. The chilling heat exchanger (**45**) is connected at one end, a liquid-side end, via the chilling expansion valve (**46**) and a solenoid valve (**7a**) in this order to a first branch liquid pipe (**12**) branched from the connecting liquid pipe (**11**) and connected at the other end, a gas-side end, to the second connecting gas pipe (**15**). The solenoid valve (**7a**) is used to shut off the refrigerant flow during thermo-off (downtime).

In the chilling heat exchanger (**45**), the refrigerant evaporation pressure is lower than the refrigerant evaporation pressure in the indoor heat exchanger (**41**). As a result, the refrigerant evaporation temperature in the chilling heat exchanger (**45**) is set at, for example, -10°C and, on the other hand, the refrigerant evaporation temperature in the indoor heat exchanger (**41**) is set at, for example, +5°C. In this manner, the refrigerant circuit (**1E**) constitutes a circuit for evaporating refrigerant at different temperatures.

The chilling expansion valve (**46**) is a thermostatic expansion valve and its temperature-sensing bulb is mounted to the gas side of the chilling heat exchanger (**45**). Thus, the opening of the chilling expansion valve (**46**) is controlled based on the refrigerant temperature at the exit side of the chilling heat exchanger (**45**). The chilling heat exchanger (**45**) is, for example, a cross-fin type fin-and-tube heat exchanger. Disposed close to the chilling heat exchanger (**45**) is a chilling fan (**47**) that is a utilizations side fan. In the chilling unit (**1C**), the chilling expansion valve (**46**) and chilling fan (**47**) are refrigeration system components.

### <Freezing Unit>

The freezing unit (**1D**) includes a freezing heat exchanger (**51**) that is a utilization side heat exchanger, a freezing expansion valve (**52**) that is an expansion mechanism, and a booster compressor (**53**) that is a freezing compressor. The freezing heat exchanger (**51**) is connected at one end, a liquid-side end, via the freezing expansion valve (**52**) and a solenoid valve (**7b**) in this order to a second branch liquid pipe (**13**) branched from the first branch liquid pipe (**12**) and is connected at the other end, a gas-side end, through a connecting gas pipe (**54**) to the suction side of the booster compressor (**53**). The booster compressor (**53**) is connected at the discharge side to a branch gas pipe (**16**) branched from the second connecting gas pipe (**15**). The branch gas pipe (**16**) is provided with an oil separator (**55**) and a check valve (**7**) in order away from the booster compressor (**53**). The check valve (**7**) allows only a refrigerant flow from the booster compressor (**53**) toward the second connecting gas pipe (**15** ). Connected between the oil separator (**55** ) and the connecting gas pipe (**54**) is an oil return pipe (**57**) with a capillary tube (**56**).

The booster compressor **(53),** together with the compressors **(2A, 2B, 2C)** in the outdoor unit **(1A),** compresses refrigerant in two stages so that the refrigerant evaporation temperature in the freezing heat exchanger **(51)** becomes lower than that in the chilling heat exchanger **(45).** The refrigerant evaporation temperature in the freezing heat exchanger **(51)** is set at, for example, -35°C.

The freezing expansion valve **(52)** is a thermostatic expansion valve and its temperature-sensing bulb is mounted to the gas side of the freezing heat exchanger **(51).** The freezing heat exchanger **(51)** is, for example, a cross-fin type fin-and-tube heat exchanger. Disposed close to the freezing heat exchanger (51) is a freezing fan **(58)** that is a utilizations side fan.

Further, a bypass pipe **(59)** with a check valve **(7)** is connected between the connecting gas pipe **(54)** and part of the branch gas pipe **(16)** downstream of the check valve **(7).** The bypass pipe **(59)** is configured to allow refrigerant to bypass the booster compressor **(53)** and flow toward the branch gas pipe **(16)** during halt of the booster compressor **(53)** due to failure or the like. In the freezing unit **(1D),** the freezing expansion valve **(52),** the freezing fan **(58)** and the booster compressor **(53)** are refrigeration system components.

### <Control System>

The refrigerant circuit **(1E)** is provided with various sensors and various switches. The high-pressure gas pipe **(8)** in the outdoor unit **(1A)** is provided with a high-pressure sensor **(61)** that is a high-pressure sensing device for detecting the high pressure of refrigerant and a discharge temperature sensor **(62)** that is a temperature sensing device for detecting the discharge temperature of refrigerant. The discharge pipe **(5c)** for the second non-inverter compressor **(2C)** is provided with a discharge temperature sensor **(63)** that is a temperature sensing device for detecting the discharge temperature of high-pressure refrigerant. Each of the discharge pipes **(5a, 5b, 5c)** for the inverter compressor **(2A),** the first non-inverter compressor **(2B)** and the second non-inverter compressor **(2C)** is provided with a pressure switch **(64)** that opens when the high pressure of refrigerant reaches a predetermined value.

The suction pipes **(6a, 6c)** for the inverter compressor **(2A)** and the second non-inverter compressor **(2C)** are provided with low-pressure sensors **(65, 66),** respectively, that are pressure sensing devices for detecting the low pressure of refrigerant and also provided with suction temperature sensors **(67, 68),** respectively, that are temperature sensing devices for detecting the suction temperature of refrigerant.

The outdoor heat exchanger **(4)** is provided with an outdoor heat exchange sensor **(69)** that is a temperature sensing device for detecting the evaporation temperature or the condensation temperature of refrigerant. In addition, the outdoor unit **(1A)** is provided with an outdoor air temperature sensor **(70)** that is a temperature sensing device for detecting the outdoor air temperature.

The indoor heat exchanger **(41)** is provided with an indoor heat exchange sensor **(71)** that is a temperature sensing device for detecting the condensation temperature or the evaporation temperature of refrigerant and also provided at its gas side with a gas temperature sensor **(72)** that is a temperature sensing device for detecting the gas refrigerant temperature. In addition, the indoor unit **(1B)** is provided with a room temperature sensor **(73)** that is a temperature sensing device for detecting the room air temperature.

The chilling unit **(1C)** is provided with a chilling temperature sensor **(74)** that is a temperature sensing device for detecting the temperature in the cold-storage display case. The freezing unit **(1D)** is provided with a freezing temperature sensor **(75)** that is a temperature sensing device for detecting the temperature in the freezer display case. The booster compressor **(53)** is provided at the discharge side with a pressure switch **(64)** that opens when the discharge pressure of refrigerant reaches a predetermined value.

The refrigeration system **(1)** includes a controller **(90).** The controller **(90)** is configured to control the openings of the outdoor expansion valve **(26)** and the indoor expansion valve **(42)** and select ports of each four-way selector valve **(3A, 3B, 3C).**

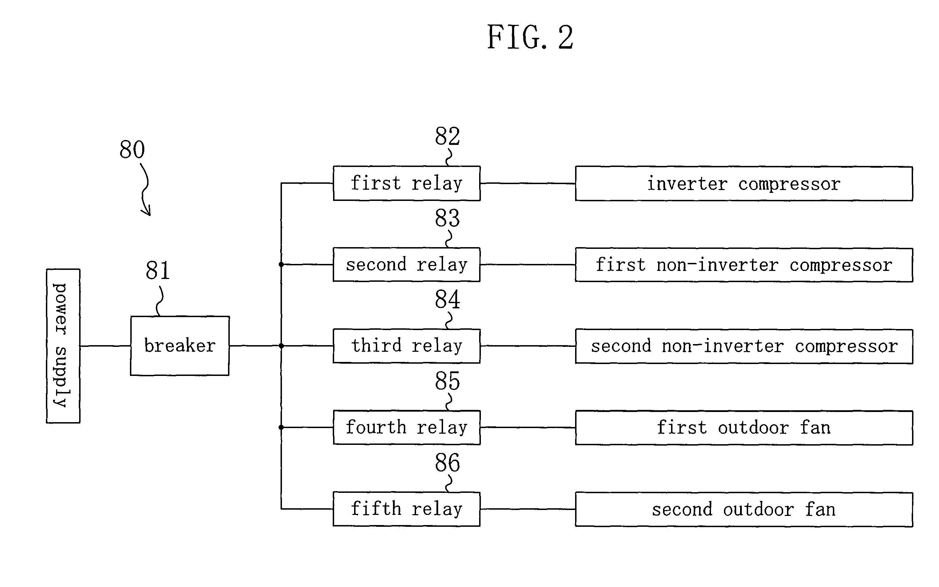

As one of features of the present invention, the controller **(80)** is configured to control a power supply circuit **(80)** for refrigeration system components. As shown in Figure **2,** the power supply circuit **(80)** is for supplying electric power to the electric system of each refrigeration system component. Specifically, a power supply is connected via a breaker **(81)** to the electric systems of the refrigeration system components, such as the inverter compressor **(2A)** and the first outdoor fan **(F1).** Though not shown, the power supply is also connected via the breaker **(81)** to the electric systems of the other refrigeration system components, such as the outdoor expansion valve **(26)** and the four-way selector valves **(3A, 3B, 3C).** The electric systems electrically conduct through the making of associated relays **(82-86),** respectively. The breaker **(81)** is configured to trip when failure occurs in any one of the electric systems of refrigeration system components during operation.

The controller **(90)** includes a sequential startup section **(91),** a failure processing section **(92)** and an operation transition section **(93)** and controls restart after the operation of the refrigeration system is halted owing to failure in the electric systems.

The sequential startup section **(91)** constitutes a sequential startup means for, upon operation restart after the breaker **(81)** trips owing to failure in the electric systems, sequentially starting up target refrigeration system components **(2A, 2B,** ...) previously selected from among various refrigeration system components. In other words, the sequential startup section **(91)** sequentially makes the relays **(82-86)** associated with the target refrigeration system components **(2A, 2B,** ...) to supply them with electric power. In this embodiment, five of the various refrigeration system components, i.e., the inverter compressor **(2A),** the first non-inverter compressor **(2B),** the second non-inverter compressor **(2C),** the first outdoor fan **(F1)** and the second outdoor fan **(F2),** are selected as the target refrigeration system components (hereinafter, referred to as target components).

The failure processing section **(92)** constitutes failure processing means for, if the breaker **(81)** trips again owing to failure in the electric systems during the sequential startup of the target components through the sequential startup section **(91),** excluding the target component supplied with electric power just before the occurrence of the failure from the target components to be started up by the sequential startup section **(91).** Specifically, when the breaker **(81)** trips during the sequential startup, the failure processing section **(92)** identifies the target component tried to be started up just before the trip as a failed component and the sequential startup section **(91)** then sequentially starts up again the target components other than the target component identified as the failed component.

The operation transition section **(93)** constitutes a transition means for, when the target components **(2A, 2B,** ...) to be started up by the sequential startup section **(91)** are all normally started up, making a transition to a normal operation while holding in a halted state the target component excluded by the failure processing section **(92),** i.e., the target component identified as a failed component. In other words, the operation transition section **(93)** restarts the operation by starting up only normal target components **(2A, 2B,** ...), leaving out the target component identified as a failed component.

### - Operational Behavior -

Next, a description will be given of the operational behavior of the refrigeration system (1). The refrigeration system **(1)** of this embodiment is configured to be switchable between a "cooling and refrigeration operation" for concurrently performing the room cooling of the indoor unit **(1B)** and the refrigeration of the chilling unit **(1C)** and the freezing unit **(1D)** and a "heating and refrigeration operation" for concurrently performing the room heating of the indoor unit **(1B)** and the refrigeration of the chilling unit **(1C)** and the freezing unit **(1D).**

### <Cooling and Refrigeration Operation>

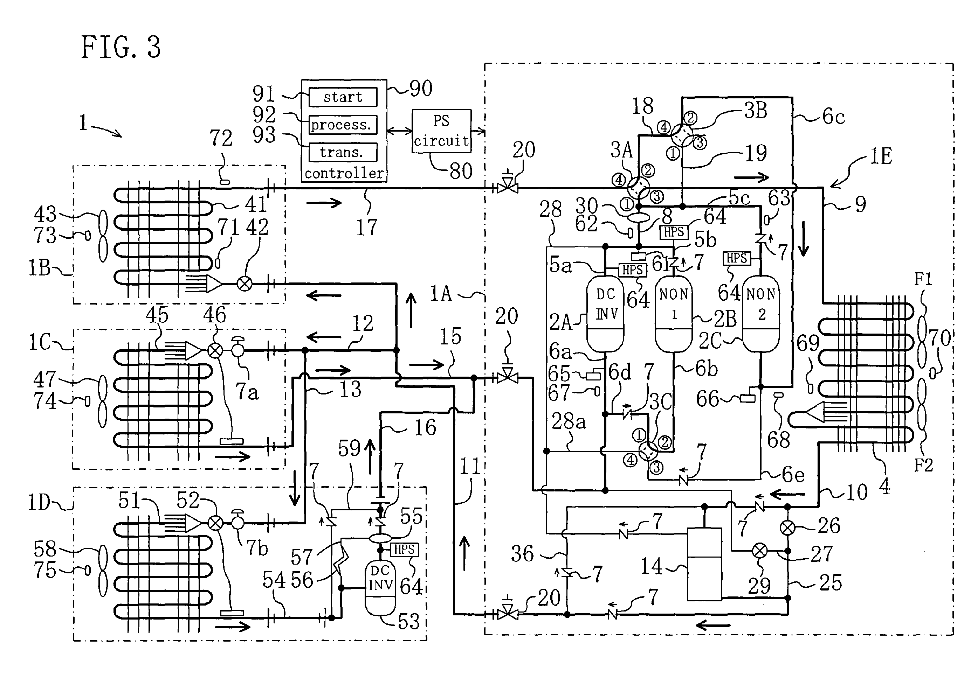

In the cooling and refrigeration operation, as shown in Figure 3, the inverter compressor **(2A),** the first non-inverter compressor **(2B)** and the second non-inverter compressor **(2C)** are driven and the booster compressor **(53)** is also driven.

The first four-way selector valve **(3A),** the second four-way selector valve **(3B)** and the third four-way selector valve **(3C)** are set to respective first positions. The solenoid valves **(7a, 7b)** in the chilling unit **(1C)** and the freezing unit **(1D)** are selected open, while the outdoor expansion valve **(26)** is selected closed. The electronic expansion valve **(29)** in the liquid injection pipe **(27)** is controlled on its opening to supply a predetermined flow rate of liquid refrigerant to the suction sides of the inverter compressor **(2A)** and the first non-inverter compressor **(2B).**

Under the above conditions, flows of refrigerant discharged from the inverter compressor **(2A),** the first non-inverter compressor **(2B)** and the second non-inverter compressor **(2C)** are combined together in the high-pressure gas pipe **(8),** flow through the first four-way selector valve **(3A)** and then the outdoor gas pipe **(9)** and condenses in the outdoor heat exchanger **(4).** The liquid refrigerant obtained by the condensation flows through the outdoor liquid pipe **(10)** and then the receiver **(14)** into the connecting liquid pipe **(11).**

Part of the liquid refrigerant in the connecting liquid pipe **(11)** flows into the first branch liquid pipe **(12)** and the rest flows into the indoor unit **(1B).** In the indoor unit **(1B),** the liquid refrigerant passes through the indoor expansion valve **(42)** and evaporates in the indoor heat exchanger **(41)** to cool the store. The gas refrigerant obtained by the evaporation flows through the first connecting gas pipe **(17)** into the outdoor unit **(1A),** passes through the first four-way selector valve **(3A)** and the second four-way selector valve **(3B),** flows through the suction pipe **(6c)** and then returns to the second non-inverter compressor **(2C).**

On the other hand, part of the liquid refrigerant having flowed into the first branch liquid pipe **(12)** flows through the second branch liquid pipe **(13)** and then into the freezing unit **(1D)** and the rest flows into the chilling unit **(1C).** In the chilling unit **(1C),** the liquid refrigerant passes through the chilling expansion valve **(46)** and then evaporates in the chilling heat exchanger **(45)** to cool the inside of the cold-storage display case. Thereafter, the gas refrigerant obtained by the evaporation flows through the second connecting gas pipe **(15).** In the freezing unit **(1D),** the liquid refrigerant passes through the freezing expansion valve **(52)** and then evaporates in the freezing heat exchanger **(51)** to cool the inside of the freezer display case. The gas refrigerant obtained by the evaporation is compressed by the booster compressor **(53),** passes through the branch gas pipe **(16)** and is then combined, in the second connecting gas pipe **(15),** with the gas refrigerant coming from the chilling unit **(1C).** The gas refrigerant combined in the second connecting gas pipe **(15)** flows into the outdoor unit **(1A),** flows through the suction pipes **(6a, 6b)** and then returns to the inverter compressor **(2A)** and the first non-inverter compressor **(2B).**

### <Heating and Refrigeration Operation>

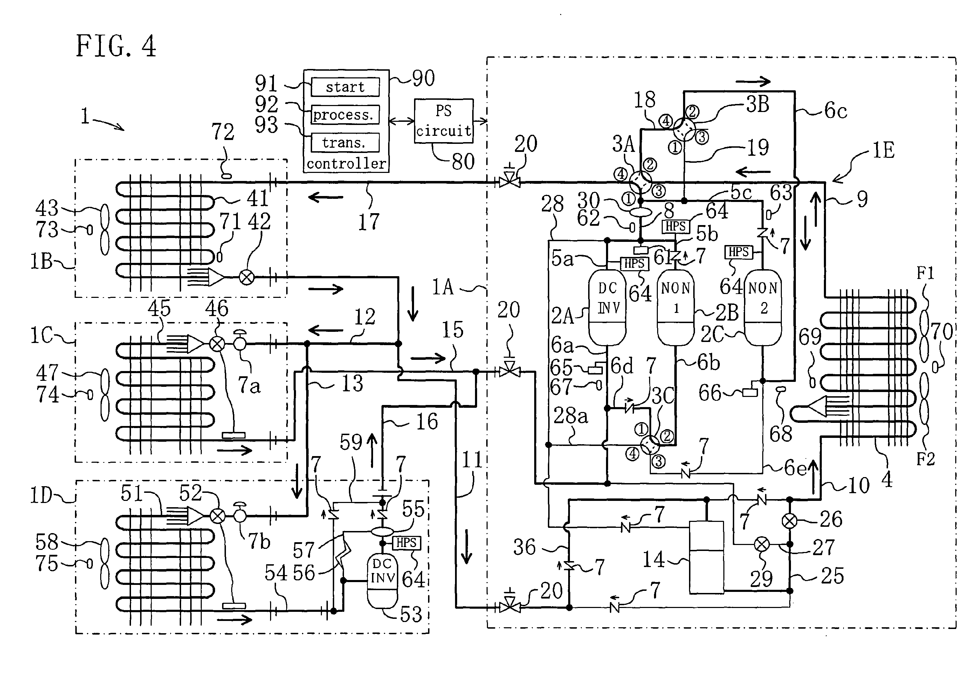

In the heating and refrigeration operation, as shown in Figure **4,** the inverter compressor **(2A),** the first non-inverter compressor **(2B)** and the second non-inverter compressor **(2C)** are driven and the booster compressor **(53)** is also driven.

The first four-way selector valve **(3A)** is set to the second position, while the second four-way selector valve **(3B)** and the third four-way selector valve **(3C)** are set to respective first positions. The solenoid valves **(7a, 7b)** in the chilling unit **(1C)** and the freezing unit **(1D)** are selected open and the indoor expansion valve **(42)** is set to its full open position. The electronic expansion valve **(29)** in the liquid injection pipe **(27)** is controlled to have a predetermined opening, thereby controlling the flow rate of refrigerant.

Under the above conditions, flows of refrigerant discharged from the inverter compressor **(2A),** the first non-inverter compressor **(2B)** and the second non-inverter compressor **(2C)** flow through the first four-way selector valve **(3A)** and then the first connecting gas pipe **(17)** and into the indoor unit **(1B).** In the indoor unit **(1B),** the liquid refrigerant condenses in the indoor heat exchanger **(41)** to heat the store. The liquid refrigerant obtained by the condensation flows through the connecting liquid pipe **(11)** and is then divided, part thereof flowing into the first branch liquid pipe **(12)** and the rest into the outdoor unit **(1A).** The liquid refrigerant having flowed into the indoor unit **(1B)** flows through the liquid branch pipe **(36)** into the receiver **(14),** then passes through the outdoor expansion valve **(26)** and then evaporates in the outdoor heat exchanger **(4).** The gas refrigerant obtained by the evaporation flows through the outdoor gas pipe **(9),** passes through the first four-way selector valve **(3A)** and the second four-way selector valve **(3B),** flows through the suction pipe **(6c)** and then returns to the second non-inverter compressor **(2C).**

On the other hand, part of the liquid refrigerant having flowed into the first branch liquid pipe **(12)** flows through the second branch liquid pipe **(13)** and then into the freezing unit **(1D)** and the rest flows into the chilling unit **(1C).** In the chilling unit **(1C),** the liquid refrigerant evaporates in the chilling heat exchanger **(45)** to cool the inside of the cold-storage display case. In the freezing unit **(1D),** the liquid refrigerant evaporates in the freezing heat exchanger **(51)** to cool the inside of the freezer display case. The gas refrigerant obtained by the evaporation is compressed by the booster compressor **(53).** Then, the flows of gas refrigerant obtained by the evaporation in the chilling unit **(1C)** and the freezing unit **(1D)** are combined in the second connecting gas pipe **(15),** flow into the outdoor unit **(1A)** and then return to the inverter compressor **(2A)** and the first non-inverter compressor **(2B).**

### <Control on Operation Resumption>

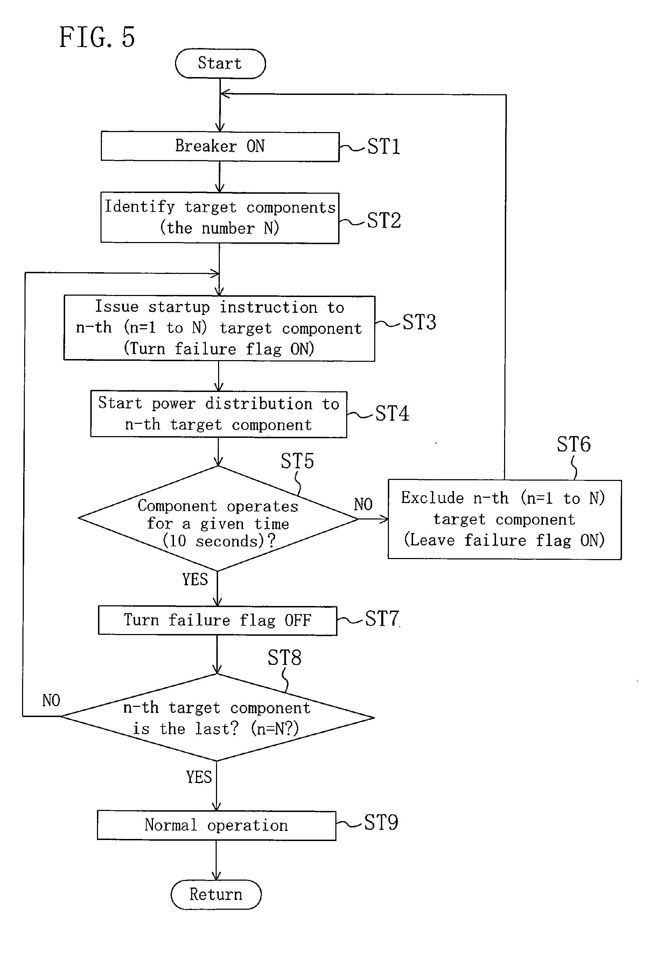

Next, a description is given of the control on operation resumption in the case where during the above operation one or some of the target components **(2A, 2B,** ...) cause failure, such as electric leakage or short circuit, in their electric systems so that the breaker **(81)** trips to abnormally halt the operation. When the breaker **(81)** trips to halt the operation, as shown in Figure **5,** the control of the controller **(90)** starts. Note that when the breaker **(81)** trips, all the relays **(82-86)** associated with the target components **(2A, 2B,** ...) are made open.

First, when in step ST1 the operator or like person turns ON the breaker **(81)** of the power supply circuit **(80)** to distribute electric power to the refrigeration system components, the control proceeds to step **ST2.** In step **ST2,** the number of target components **(2A, 2B,** ...) is identified by the sequential startup section **(91)** of the controller **(90).** Specifically, the number of target components is identified as five (N=5) including the inverter compressor **(2A),** the first non-inverter compressor **(2B),** the second non-inverter compressor **(2C),** the first outdoor fan **(F1)** and the second outdoor fan **(F2).**

In step **ST3,** the sequential startup section **(91)** issues a startup instruction to the inverter compressor **(2A).** Specifically, in this embodiment, the sequential startup section **(91)** is previously configured to sequentially issue startup instructions to start up the target components in the following order: the inverter compressor **(2A)** as a first (n=1) target component to be first started up, the first non-inverter compressor **(2B)** as a second (n=2) target component to be secondly started up, the second non-inverter compressor **(2C)** as a third (n=3) target component to be thirdly started up, the first outdoor fan **(F1)** as a fourth (n=4) target component to be fourthly started up and the second outdoor fan **(F2)** as a fifth (n=5) target component to be fifthly started up. Further, in step **ST3,** when a startup instruction is issued to the inverter compressor **(2A),** a "failure flag" is turned ON during a given period of time T1 (for example 0.3 seconds).

Next, in step **ST4,** when a given period of time T2 (for example, 0.1 seconds) passes since the startup instruction has been issued to the inverter compressor **(2A)** in step **ST3,** the sequential startup section **(91)** makes the first relay **(82)** of the power supply circuit **(80)** to start power distribution to the inverter compressor **(2A).** Then, the control proceeds to step **ST5.**

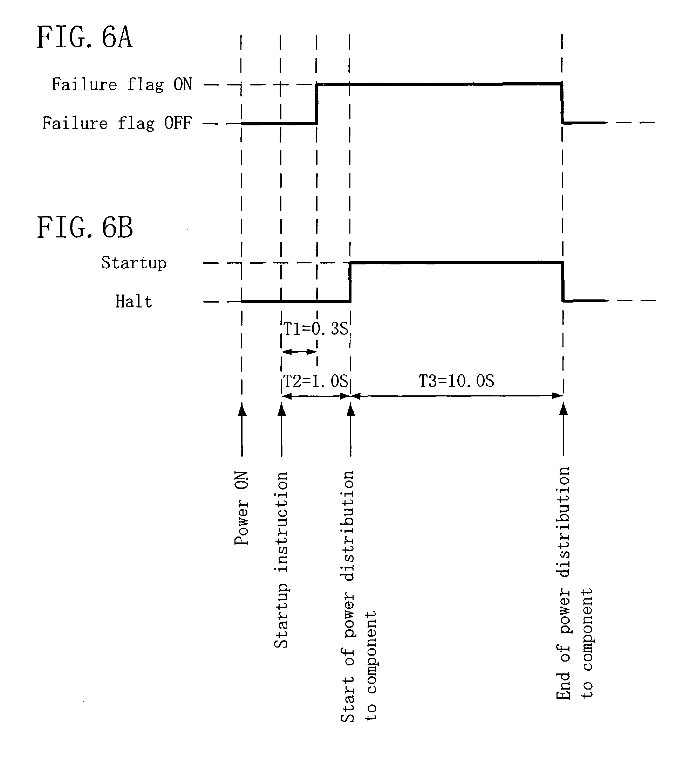

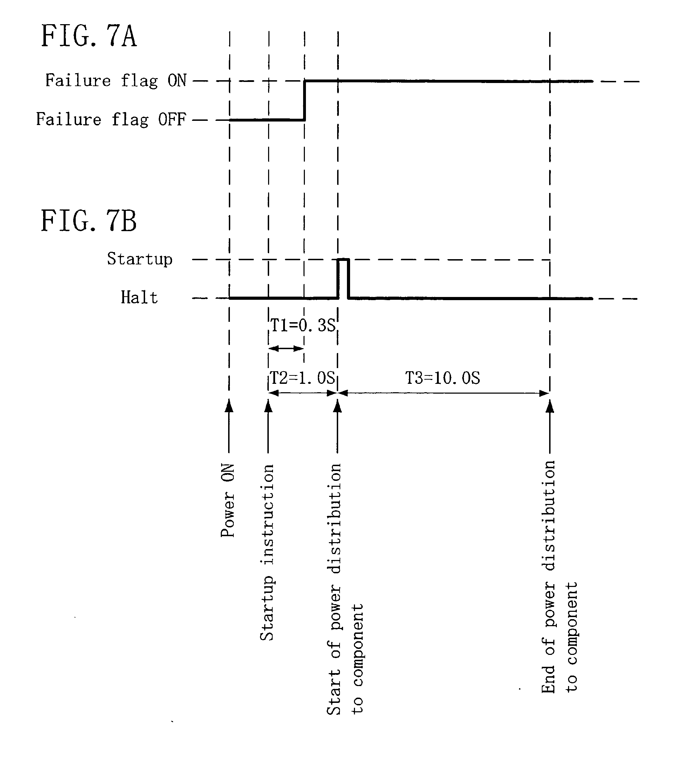

In step **ST5,** it is determined whether or not the inverter compressor **(2A)** has normally started up. Specifically, as shown in Figure **6,** if the inverter compressor **(2A)** continues to be driven for a given period of time T3 (for example, 10.0 seconds) since the start of power distribution, the inverter compressor **(2A)** is determined to have normally started up and the control proceeds to step **ST7.** In this case, if the given period of time T3 has passed since the start of power distribution, the sequential startup section **(91)** opens the first relay **(82)** to stop power distribution. On the other hand, for example, if as shown in Figure **7** the inverter compressor **(2A)** first starts up after the start of power distribution but the breaker **(81)** then trips again owing to failure in the electric system to halt the inverter compressor **(2A)** before the passage of the given period of time T3, the inverter compressor **(2A)** is determined to have not normally started up and the control proceeds to step **ST6.** In step **ST5,** not only in the case shown in Figure 7 but also in the case where the inverter compressor **(2A)** is halted for the given period of time T3 since the start of power distribution and in the case where it is first halted, then starts up partway through the given period of time T3 and is halted again, it is determined to have not normally started up. In short, in step **ST5,** if the inverter compressor **(2A)** is halted even once during the given period of time T3 since the start of power distribution, it is determined to have not normally started up.

In step **ST6,** the failure processing section **(92)** excludes the inverter compressor **(2A)** from the target components to be started up by the sequential startup section **(91)** and leaves its "failure flag" ON. In other words, in step **ST6,** the inverter compressor **(2A)** is identified as a failed component. If the inverter compressor **(2A)** is identified as a failed component, the control returns to step **ST1** and the breaker **(81)** is turned ON again. Then, in step **ST2,** the number of target components is re-identified as four (N=5-1). Specifically, in step **ST2,** the first non-inverter compressor **(2B),** instead of the inverter compressor **(2A),** is reset as a first (n=1) target component and then the control proceeds to step **ST3.**

In step **ST3,** the sequential startup section **(91)** sequentially issues startup instructions to the target components again. Specifically, the sequential startup section **(91)** skips the inverter compressor **(2A)** excluded from the target components and issues a startup instruction to the first non-inverter compressor **(2B)** that is the first (n=1) target component. Thereafter, the control sequentially proceeds to the step **ST4** and the subsequent steps in the same manner as described above.

On the other hand, when the control proceeds from step **ST5** to step **ST7,** the inverter compressor **(2A)** is identified as a normal component, its "failure flag" is turned OFF and the control proceeds to step **ST8.** In step **ST8,** it is determined whether or not the inverter compressor **(2A)** is a last target component **(2A, 2B,** ...), i.e., whether or not it is a fifth (n=N) target component. If the inverter compressor **(2A)** is determined not to be a last target component, the control returns to step **ST3.** If the inverter compressor **(2A)** is determined to be a last target component, the control proceeds to step **ST9.**

In step **ST3,** the sequential startup section **(91)** issues a startup instruction to the first non-inverter compressor **(2B)** which is a second (n=2) target component and a "failure flag" for the first non-inverter compressor **(2B)** is turned ON. Thereafter, the control proceeds to step **ST4** and the subsequent steps in the same manner as described above.

In this manner, the control of the present invention is implemented by sequentially starting up the target components **(2A, 2B,** ...) to sequentially determine whether or not each of them is a failed component and sequentially starting up again, if a failed component is identified, the target components **(2A, 2B,** ...) other than the failed component. Here, for example, suppose that the inverter compressor **(2A)** is identified as a normal component, the first non-inverter compressor **(2B)** is then identified as a failed component, the second non-inverter compressor **(2C)** is then identified as a normal component and the first outdoor fan **(F1)** is then identified as a failed component.

In this case, in step **ST6,** the first outdoor fan **(F1)** is excluded from the target components to be started up by the sequential startup section **(91),** its "failure flag" is left ON and the control returns to step **ST1** to turn the breaker **(81)** ON again. Next, in step **ST2,** the number of target components is re-identified as N=4-1=3 (i.e., the inverter compressor **(2A),** the second non-inverter compressor **(2C)** and the second outdoor fan **(F2).** Then, in step **ST3,** the sequential startup section **(91)** sequentially issues startup instructions to the re-identified three target components.

Specifically, first, when the sequential startup section **(91)** issues a startup instruction to the inverter compressor **(2A)** that is a first (n=1) target component, the control sequentially proceeds to step **ST4** and the subsequent steps, the inverter compressor **(2A)** is determined in step **ST8** not to be a last (n=1≠N) target component and the control returns to step **ST3.** In step **ST3,** the sequential startup section **(91)** skips the first non-inverter compressor **(2B)** previously excluded from the target components and issues a startup instruction to the second non-inverter compressor **(2C)** that is a second (n=2) target component. Then, the control proceeds to step **ST4** and the subsequent steps, the second non-inverter compressor (2C) is determined in step **ST8** not to be a last (n=2≠N) target component and the control returns to step **ST3.** Next, in step **ST3,** the sequential startup section (91) skips the first outdoor fan **(F1)** previously excluded from the target components and issues a startup instruction to the second outdoor fan **(F2)** that is a third (n=3) target component. Then, the control proceeds to step **ST5** and then step **ST7.** If the second outdoor fan **(F2)** is determined to be a normal component, the control proceeds to step **ST8.** In step **ST8,** if the second outdoor fan **(F2)** is determined to be a last (n=N=3) target component, the control proceeds to step **ST9** through the operation transition section (93).

If, for the second outdoor fan **(F2),** the control proceeds to step **ST5** and then step **ST6** and the second outdoor fan **(F2)** is identified as a failed component, the control returns to step **ST1,** the inverter compressor (2A) and the second non-inverter compressor **(2C)** are sequentially started up as target components to be started up by the sequential startup section **(91),** and, finally, the control proceeds to step **ST9.**

If the second outdoor fan **(F2)** is identified as a last target component and the control proceeds to step **ST9,** the operation transition section **(93)** resumes the normal operation. Specifically, when the breaker (81) is turned ON again, the inverter compressor (2A), the second non-inverter compressor (2C) and the second outdoor fan (F2), leaving out the first non-inverter compressor (2B) and the first outdoor fan (F1) with their "failure flags" left ON, are sequentially started up by the operation transition section (93), thereby resuming the normal operation.

For example, in the case where the cooling and refrigeration operation is resumed, the first non-inverter compressor (2B) is out of action. Therefore, the cooling capacities of the chilling unit **(1C)** and the freezing unit **(1D)** are lowered. Further, since the first outdoor fan **(F1)** is out of action, the amount of heat exchange in the outdoor heat exchanger (4) is deteriorated. However, at least the operation can be surely resumed (restarted).

### - Effects of Embodiment -

As described so far, in this embodiment, if the breaker (81) trips owing to failure in the electric systems of refrigeration system components to abnormally halt the operation, the compressors (2A, 2B, 2C) and the outdoor fans **(F1, F2)** previously selected as target components are sequentially started up. If during the sequential startup the breaker (81) trips again owing to failure in the electric systems, the target component supplied with electric power just before the trip is not started up anymore. Therefore, from among the target components (**2A, 2B**, ...), a failed component having caused failure in its electric system can be surely identified.

Further, if all the target components (**2A, 2B**, ...) to be sequentially started up normally start up, a transition to the normal operation is made while the component identified as a failed component is held halted. This avoids that the breaker (**81**) trips again owing to failure in the electric system to abnormally halt the normal operation. Therefore, though the capacity associated with the failed component is not performed, at least the operation can be surely resumed (restarted).

Furthermore, if a failed component is identified, the "failure flag" for the failed component is left ON. Thus, the failed component can be surely excluded from the target components (**2A, 2B**, ...). Therefore, a transition to the normal operation can be surely made.

Furthermore, three compressors **(2A, 2B, 2C)** and two outdoor fans **(F1, F2)** are selected as the target components (2A, 2B, ...). Therefore, even if some of them becomes out of action owing to failures in their electric systems, at least a normal compressor (2A, **2B,** 2C) and/or a normal outdoor fan **(F1, F2)** can be started up, which ensures operation resumption.

### <<Embodiment 2 of the Invention>>

A refrigeration system (**1**) according to Embodiment 2 is configured to start up, at every start of the normal operation, the target components (**2A, 2B**, ...) while determining whether or not they are failing. In Embodiment 1, in restarting the operation after the halt owing to electric system failure such as electric leakage, the determination of whether the target components (**2A, 2B,** ...) are failing is made, the failed components are excluded from the target components and the normal operation is then resumed. In contrast, the refrigeration system (**1**) according to this embodiment is configured to control startup so that, though the determination of whether the target components (**2A, 2B,** ...) are failing is made at the start of the normal operation, the determination is ended when the number of target components (**2A, 2B**, ...) identified as normal components reaches a necessary number and a transition to the normal operation is then immediately made.

Specifically, at the start of the normal operation, the startup control on the compressors (**2A, 2B, 2C**) and the startup control on the fans (**F1, F2**) are individually carried out substantially at the same time. Because the startup control on the compressors (**2A, 2B, 2C**) is similar to the startup control on the fans (**F1, F2**), a description is given here mainly of the startup control on the compressors (**2A, 2B, 2C**).

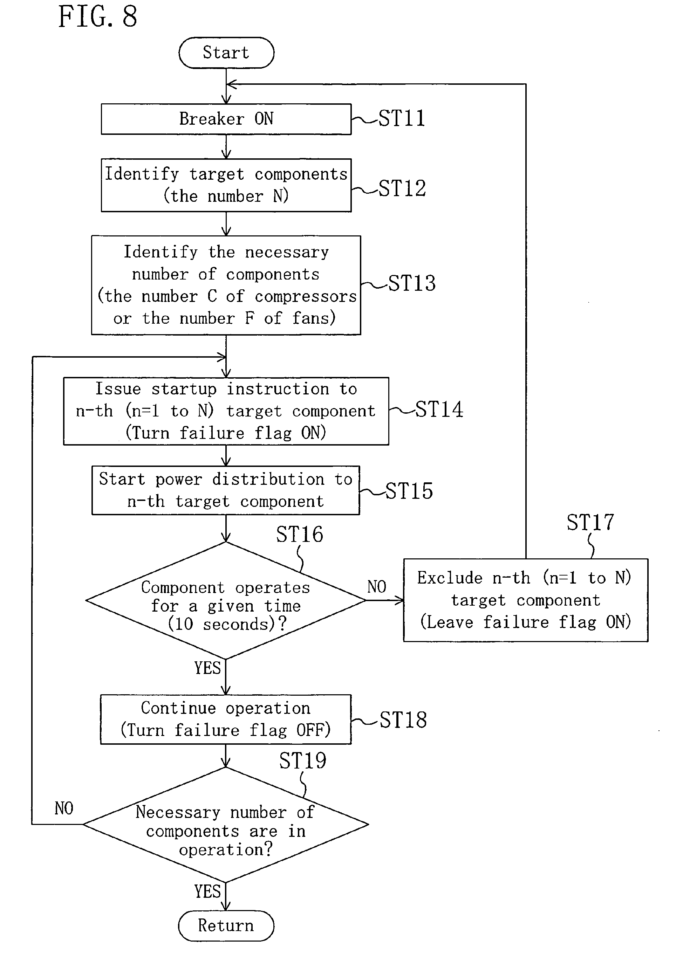

As shown in Figure **8**, first, when in step **ST11** the operator or like person turns ON the breaker (**81**) of the power supply circuit (**80**) to distribute electric power to the refrigeration system components, the control proceeds to step **ST12**. In step **ST12**, the number of compressors (**2A, 2B, 2C**) that are target components are identified as N=3 by the sequential startup section (**91**) of the controller (**90**). For the startup control on the fans (**F1, F2**), the number of fans (**F1, F2**) that are target components are identified as N=2.

Subsequently, in step **ST13**, the necessary number C of compressors (**2A, 2B, 2C**) for the normal operation is identified and, then, the control proceeds to step **ST14**. Though the necessary number of compressors is determined according to operating conditions, it is assumed in this embodiment that the necessary number is C=2. For the startup control on the fans (**F1, F2**), the necessary number F of fans (**F1, F2**) is identified (as, for example, F=1) in step **ST13**.

Next, the transitions from step **ST14** to step **ST16** are processed in a similar manner to the transitions from step **ST3** to step **ST5** in Embodiment 1. Specifically, in step **ST1**4, the sequential startup section (**91**) issues a startup instruction to the inverter compressor (**2A**) that is a first (n=1) target compressor and its "failure flag" is turned ON. Also in this embodiment, the sequential startup section (**91**) is previously configured to sequentially issue startup instructions in the order of the inverter compressor (**2A**), the first non-inverter compressor (**2B**) and the second non-inverter compressor (**2C**). In step ST15, the sequential startup section (**91**) makes the first relay (**82**) of the power supply circuit (**80**) to start power distribution to the inverter compressor (**2A**). Then, if in step **ST16** the breaker (**81**) trips and the inverter compressor (**2A**) is determined to have not normally started up, the control proceeds to step **ST17**. If in step **ST16** the inverter compressor (**2A**) is determined to have normally started up, the control proceeds to step **ST18**.

In step **ST1**7, like Embodiment 1, the failure processing section (**92**) identifies the inverter compressor (**2A**) as a failed component, excludes it from the target compressors to be started up by the sequential startup section (**91**) and leaves its "failure flag" ON. If the inverter compressor (**2A**) is identified as a failed component, the control returns to step **ST11** and the breaker (**81**) is turned ON again. Then, in step **ST1**2, the number of target compressors **(2A, 2B, 2C)** is re-identified as two (N=3-1). Specifically, in step **ST12,** the first non-inverter compressor **(2B),** instead of the inverter compressor **(2A),** is reset as a first (n=1) target compressor and then the control proceeds to step **ST13.** In step **ST13,** it is confirmed that the necessary number (C=2) of compressors **(2A, 2B, 2C)** is not changed. Then, the control proceeds to step **ST14.**

In step **ST14,** the sequential startup section **(91)** sequentially issues startup instructions to the target compressors **(2A, 2B, 2C)** again. Specifically, the sequential startup section **(91)** skips the inverter compressor **(2A)** excluded from the target compressors and issues a startup instruction to the first non-inverter compressor **(2B)** that is a first (n=1 ) target compressor. Thereafter, the control sequentially proceeds to the step **ST15** and the subsequent steps in the same manner as described above.

On the other hand, when the control proceeds from step **ST16** to step **ST18,** the inverter compressor **(2A)** is identified as a normal component and continues to be operated and the control proceeds to step **ST19.** At the time, the "failure flag" for the inverter compressor **(2A)** is turned OFF. In other words, in this embodiment, unlike Embodiment 1, the target components identified as normal components continue to be operated without halting power distribution thereto.

In step **ST19,** it is determined whether or not the number of compressors **(2A, 2B, 2C)** in operation at the current moment reaches the necessary number (C=2) identified in step **ST13.** If the number of compressors **(2A, 2B, 2C)** in operation is determined not to reach the necessary number, the control returns to step **ST14.** On the other hand, if the number of compressors **(2A, 2B, 2C)** in operation is determined to reach the necessary number, the startup control on the compressors **(2A, 2B, 2C)** ends. In the former case, since only the inverter compressor **(2A)** is in operation, it is determined that the number of compressors **(2A, 2B, 2C)** in operation does not reach the necessary number, two. Therefore, the control returns to step **ST14.** For the startup control on the fans **(F1, F2),** in step **ST19,** it is determined whether or not the number of fans **(F1, F2)** in operation at the current moment reaches the necessary number (for example, F=1) identified in step **ST13.** If the number of fans in operation reaches the necessary number, the startup control on the fans **(F1, F2)** ends.

Subsequently, in step **ST14,** the sequential startup section **(91)** issues a startup instruction to the first non-inverter compressor **(2B)** that is a second (n=2) target compressor and, thereafter, the control sequentially proceeds to step **ST15** and the subsequent steps in the same manner as described above. If in step **ST18** the first non-inverter compressor **(2B)** is identified as a normal component and thus continues to operate, then two compressors, i.e., the inverter compressor **(2A)** and the first non-inverter compressor **(2B),** are in operation. Therefore, the number of compressors **(2A, 2B, 2C)** in operation is determined to reach the necessary number, two, in step **ST19** and the startup control on the compressors **(2A, 2B, 2C)** ends.

In contrast to the above case, if in step **ST17** the first non-inverter compressor **(2B)** is excluded as a failed component from the target compressors to be started up by the sequential startup section **(91),** the control returns to step **ST11** and the breaker **(81)** is turned ON again. Then, in step **ST12,** the number of target compressors **(2A, 2B, 2C)** is re-identified as two (N=3-1). In other words, in step **ST12,** the second non-inverter compressor **(2C),** instead of the first non-inverter compressor **(2B),** is reset as a second (n=2) target compressor. Then, in step **ST13,** the necessary number (C=2) of compressors **(2A, 2B, 2C)** is reconfirmed. Subsequently, in step **ST14,** the sequential startup section **(91)** issues again an startup instruction to the inverter compressor **(2A)** that is the first (n=1) target compressor. Then, the control proceeds to step **ST15** and the subsequent steps. While the inverter compressor **(2A)** continues to normally operate, the number of compressors **(2A, 2B, 2C)** in operation is determined not to reach the necessary number, two, in step **ST19.** As a result, the control returns to step **ST14** and, in step **ST14,** the sequential startup section **(91)** issues an startup instruction to the second non-inverter compressor **(2C)** that is the second (n=2) target compressor. Then, the control proceeds to step **ST15** and the subsequent steps. If in step **ST18** the second non-inverter compressor **(2C)** is identified as a normal component and thus continues to operate, then the two compressors, i.e., the inverter compressor **(2A)** and the second non-inverter compressor **(2C),** are in operation. Therefore, the number of compressors **(2A, 2B, 2C)** in operation is determined to reach the necessary number, two, in step **ST19** and the startup control on the compressors **(2A, 2B, 2C)** ends.

In Embodiment 2, when both the startup control on the compressors **(2A, 2B, 2C)** and the startup control on the fans **(F1, F2)** end, the operation transition section **(93)** allows the normal operation to be continued as it is.

As described so far, in this embodiment, like Embodiment 1, if during the sequential startup of the compressors **(2A, 2B, 2C)** and outdoor fans **(F1, F2)** selected as target components the breaker **(81)** trips owing to failure in their electric systems, the target component supplied with electric power just before the trip is not started up anymore. Therefore, from among the target components **(2A, 2B, ...),** a failed component having caused failure in its electric system can be surely identified.

Further, in this embodiment, the determination of whether the target components are failing is made not for all the compressors **(2A, 2B, 2C)** and fans **(F1, F2)** as done in Embodiment 1 but is ended at the time when the number of normal components is determined to reach the necessary number. Thus, only refrigeration system components of the number according to the necessary refrigeration capacity can be surely started up. This eliminates the need to determine whether unnecessary components for operation are failing, which shortens the time taken to start the normal operation. The rest of the configuration, the other behaviors and effects are the same as in Embodiment 1.

### <<Other Embodiments>>

The above embodiments of the present invention may have the following configurations.

For example, though in the above embodiments the compressors **(2A, 2B, 2C)** and the outdoor fans **(F1, F2)** are selected as target components to be started up by the sequential startup section **(91),** the booster compressor **(53)** and/or the four-way selector valves **(3A, 3B, 3C)** may be additionally selected or either of the compressors **(2A, 2B, 2C)** or the outdoor fans **(F1, F2)** may be selected.

Alternatively, a plurality of utilization fans including the indoor fan **(43)** and the chilling fan **(47)** may be provided and selected as target components to be started up by the sequential startup section **(91).**

Though in the above embodiments three compressors **(2A, 2B, 2C)** are provided in the outdoor unit **(1A),** it goes without saying that any one of them may be dispensed with.

Though in the above embodiments each unit **(1A, 1B, 1C)** is singular, it goes without saying that each unit **(1A, 1B, 1C)** may comprise a plurality of units.

The above embodiments are merely preferred embodiments in nature and are not intended to limit the scope, applications and use of the invention.

### Industrial Applicability

As seen from the above, the present invention is useful as a refrigeration system with various kinds of motor-operated refrigeration system components.

## Claims

1. A refrigeration system for performing a refrigeration operation in which electric systems of refrigeration system components **(2A, 2B,** ...) are supplied with electric power from a power supply through a breaker, the refrigeration system comprising:
sequential startup means **(91)** for, upon operation restart after the breaker trips owing to failure in the electric systems, sequentially starting up target refrigeration system components **(2A, 2B,** ...) previously selected from among the refrigeration system components; and
failure processing means **(92)** for, if the breaker trips again owing to failure in the electric systems during the sequential startup of the target refrigeration system components through the sequential startup means **(91),** excluding the refrigeration system component **(2A, 2B,** ...) supplied with electric power just before the occurrence of the failure from the target refrigeration system components to be started up by the sequential startup means **(91).**

2. The refrigeration system of claim 1, further comprising transition means **(93)** for, when the target refrigeration system components **(2A, 2B,** ...) to be started up by the sequential startup means **(91)** are all normally started up, making a transition to a normal operation while holding in a halted state the refrigeration system component **(2A, 2B,** ...) excluded from the target refrigeration system components by the failure processing means **(92).**

3. The refrigeration system of claim 1, wherein the target refrigeration system components to be sequentially started up by the sequential startup means **(91)** are a plurality of compressors **(2A, 2B, 2C).**

4. The refrigeration system of claim 1, wherein the target refrigeration system components to be sequentially started up by the sequential startup means **(91)** are a plurality of compressors **(2A, 2B, 2C)** and a plurality of fans **(F1, F2).**
